# EUROPÄISCHE PATENTSCHRIFT

(11) **EP 0 932 234 B1**
(45) Veröffentlichungstag und Bekanntmachung des Hinweises auf die Patenterteilung: **31.03.2004**
(21) Anmeldenummer: 98123693.8
(22) Anmeldetag: 12.12.1998
(51) Int. Cl.: H02G 3/30

(54) **Verfahren zur Befestigung eines Leitungsstranges auf einem Trägerteil**
Device for fixing a conduit to a supporting part
Dispositif pour fixer une conduite sur un support

(30) Priorität: 23.01.1998 DE 19802591; 23.06.1998 DE 19827862
(43) Veröffentlichungstag der Anmeldung: 28.07.1999
(73) Patentinhaber: Volkswagen Aktiengesellschaft, 38436 Wolfsburg (DE)
(72) Erfinder: Kastner, Michael Dipl.-Ing., 38446 Wolfsburg (DE)
(74) Vertreter: Zucker, Volker, Dipl.-Ing.

(56) Entgegenhaltungen:
- WO-A-92/17286
- DE-A- 4 410 558

## Beschreibung

Die Erfindung betrifft ein Verfahren zur Befestigung eines Bauteils auf einem Trägermaterial, insbesondere für Leitungen auf einem Trägerteil.

Kabelbäume sind aus einem Verbund mehrerer elektrischer Leitungen gebildet und dienen in Fahrzeugen der elektrischen Verbindung von Bauteilen, Verbrauchern und Baugruppen. Die elektrischen Leitungen sind dabei parallel verlaufend mit vorbestimmten Leitungsabgängen zusammengefaßt und vorzugsweise durch ein Wickelband fixiert oder durch einen Isolierschlauch zusammengefaßt. Sie können zur Erleichterung ihrer Herstellung und Installation im Fahrzeug entsprechend dem Fahrzeugaufbau in mehrere Sektionen unterteilt sein, die mit entsprechenden Mehrfachsteckem miteinander verbunden werden. Die Herstellung eines Kabelbaumes kann nach einem vorbestimmten Legeprogramm erfolgen, wobei auf Nagel- oder Legebrettern die jeweilige Struktur des Kabelbaumes vorbestimmt wird. Der Kabelbaum kann zum Schutz mit einem Kunststoffschlauch geschützt und mit Kunststoff- oder Metall-Halterungselementen am Fahrzeugaufbau befestigt sein. Dabei kann der Kabelbaum auch mit Versteifungen zur Erzielung einer das Einlegen in karosserieseitige Vertiefungen durch Handhabungsautomaten zulassenden Formsteife versehen sein (US-PS 38 36 415).

Es ist auch bekannt, einen Kabelbaum in ein formstabiles Auskleidungs-/Innenverkleidungsteil zu integrieren und gegebenenfalls dabei in einen Schaumstoffkörper einzubetten (DE-33 37 596 A1). Die Ummantelung eines Kabelstranges kann nach der EP-A-O 235 924 durch Umspritzen einzelner Stränge des Kabelbaumes mit einem Kunststoff formstabil oder nach der DE 41 38 215 C2 mit einem Flechtschlauch erfolgen, der durch Stauchen im Durchmesser elastisch aufweitbar ist und axial und mit Hilfe einer losen, bereits beim Flechten des Schlauches mit eingebrachten Seele als Montagehilfe auf den Kabelstrang aufgebracht wird.

Aus der EP 0 543 469 A1 und auch der EP 0 714 812 A1 ist des weiteren ein Kabelbaum bekannt, der zur Verbesserung der Handhabung und Montage in ein kanalartiges Trägersystem aus formstabilen Trägerelementen und flexiblen Verbindungselementen eingebettet ist.

Ferner ist es bekannt, einen fertigen Kabelbaum zur Montage in einem Formkörper aus Kunststoff ortsfest und wasserdicht einzubetten, wobei Sollbiegebereiche aus elastischem Kunststoff vorgesehen sind, oder einen Kabelbaum zu umschäumen und durch Variation der Schaumaushärtung Bereiche unterschiedlicher Nachgiebigkeit zu schaffen.

Der Aufwand bei der Herstellung eines Kabelbaumes nach dem vorstehend genannten Stand der Technik, insbesondere durch Umwickeln mit einem Wickelband, ist aufwendig und erfordert die Anordnung von Befestigungselementen zu dessen Fixierung an der jeweiligen Fahrzeugsektion.

Nachteilig an den bekannten Kabelbäumen ist, daß entweder separate Befestigungsmittel vorgesehen sind oder die Kabelbäume mit dem Trägermaterial verklebt sind. Bei der Verwendung von Klebern tritt insbesondere das Problem der Auftragung und Aushärtung auf, die ein Automatisieren der Fertigung erschweren.

Der Erfindung liegt daher das technische Problem zugrunde, ein Verfahren zur Befestigung eines Bauteils auf einem Trägermaterial zu schaffen, das möglich einfach und kostengünstig ist und sich einfach automatisieren läßt.

Die Lösung des technischen Problems ergibt sich durch die Merkmale des Patentanspruchs 1. Dabei wird das Bauteil mit einem Befestigungsmittel mit einer Kontaktfläche dadurch befestigt, indem die Kontaktfläche aus einem mit dem Trägermaterial thermisch verschweißbaren Material besteht, und das Befestigungsmittel durch thermisches Verschweißen der Kontaktfläche mit dem Trägermaterial befestigt wird. Dadurch werden separate Halterungselemente oder Verbindungsmittel überflüssig. Da ein thermisches Verschweißen auch über eine gewisse Entfernung hin möglich ist, ist die fertigungstechnische Zugänglichkeit des Leitungsstranges weniger kritisch, was die Durchführung des Verfahrens mit Schweißautomaten vereinfacht. Weitere vorteilhafte Ausgestaltungen der Erfindung ergeben sich aus den Unteransprüchen.

Unter dem Begriff Bauteil werden hier insbesondere kleinere Anbauteile wie Sensoren, Leuchten oder elektrische Leitungen verstanden.

Dabei kann die thermisch verschweißte Kontaktfläche in ihrer Dimension so gewählt werden, daß sich eine ausreichende Haltekraft für das Bauteil ergibt.

Die thermisch verschweißte Fläche kann z. B. ringförmig um das Bauteil herumgelegt werden, so daß das Bauteil allseitig gegen Verrutschen gesichert ist.

Einen besonderen Vorteil bietet die Erfindung für die Befestigung von elektrischen oder fluidischen Leitungen. Das Befestigungsmittel ist dann zweckmäßigerweise eine Folie, die auf das Trägermaterial gelegte Leitungen gelegt wird und dann nach Art eines Heftpflasters zu beiden Seiten der Leitung thermisch verschweißt wird.

In einer weiteren bevorzugten Ausführungsform wird ein Kabelbinder mit einer zusätzlichen Kontaktfläche verwendet, die mit dem Trägermaterial verschweißbar ist. Die Kontaktfläche ist vorzugsweise einstückig mit dem Kabelverbinder ausgebildet und kann beispielsweise kreis-, rechteckförmig oder quadratisch ausgebildet sein. Durch die Kontaktfläche kann einerseits die Verbindungsfläche und damit die Festigkeit der Verbindung erhöht werden, andererseits erhöht die exponierte Kontaktfläche die Zugänglichkeit. Ein weiterer Vorteil ist, daß der Abstand zwischen dem Ort der Erwärmung und den Leitungen vergrößert wird, so daß eine versehentliche thermische oder mechanische Beschädigung der Isolierung vermieden wird.

Bei Verwendung einer Folie kann diese exponierte Kontaktfläche auf verschiedene Arten realisiert werden. So kann die Kontaktfläche an der Folie bereits ausgebildet sein oder aber beim Zusammenfassen des Leistungsstranges gebildet werden, indem die Folie radial vollständig die Leitungen umfaßt und derart verbunden wird, daß sich eine seitlich abstehende Kontaktfläche bildet. Alternativ kann die Folie derart um die Leitungen geschlagen werden und verbunden werden, daß die Leitungen mit einem gewissen Spiel in der so gebildeten Hülle angeordnet sind. Dazu eigenen sich besonders schaumbandförmige Folien.

Mittels eines geeigneten Werkzeuges kann durch ein- oder zweiseitigen Druck der seitliche Teil der Folie auf das Trägermaterial gepreßt und verschweißt werden. Allen Prinzipien ist gemeinsam, daß eine größere, leitungsfreie Kontaktfläche für den Schweißvorgang zur Verfügung gestellt wird.

Vorzugsweise sind Trägermaterial, Kabelbinder und/oder Folie aus Polyethylen oder Polypropylen, wobei bevorzugt gleiche Materialien miteinander thermisch verschweißt werden sollten.

Unter dem Begriff Folie sind auch flächenhafte Gebilde im weiteren Sinne wie z. B. Vliese, Gewebe oder dünnschichtige Platten zu verstehen.

Die Erfindung wird nachfolgend anhand eines bevorzugten Ausführungsbeispieles näher erläutert. Die Figuren zeigen:
- Fig. 1a: einen Querschnitt durch einen Leitungsstrang mit einer schaumbandförmigen Folie,
- Fig. 1b: einen Querschnitt gemäß Fig. 1a vor dem Schweißvorgang,
- Fig. 2a - b: einen Querschnitt durch einen Leitungsstrang mit einer radial vollständig umfassenden Folie,
- Fig. 3a: einen Querschnitt durch einen Leitungsstrang mit teilweise umfassender Folie,
- Fig. 3b: eine Perspektivdarstellung des Leitungsstranges gemäß Fig. 3a,
- Fig. 4: einen Querschnitt durch einen Leitungsstrang mit Kabelbinder,
- Fig. 5: ein Querschnitt durch einen Leitungsstrang mit einer darübergelegten Folie,
- Fig. 6: ein Auskleidungsteil mit darauf befestigten Leitungen, und
- Fig. 7: ein Querschnitt durch ein auf einem Trägerteil befestigten Bauteil.

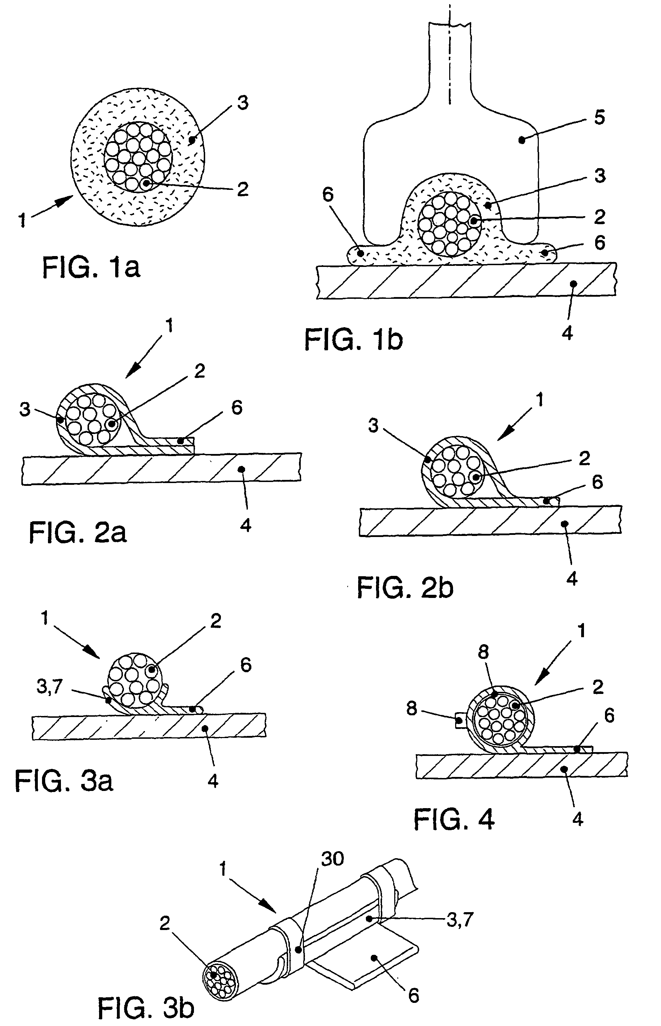

In der Fig. 1a ist eine Querschnitt durch einen Leitungsstrang 1 dargestellt. Der Leitungsstrang 1 umfaßt eine Vielzahl von Leitungen 2, die von einer schaumbandförmigen Folie 3 vollständig umschlungen sind. Die Enden der Folie 3 sind beispielsweise miteinander verklebt oder verschweißt. Die Leitungen 2 können an der Innenseite der Folie 3 fixiert sein oder aber lose im durch die Folien 3 gebildeten Kanal angeordnet sein. Des weiteren können die Leitungen 2 auch mittels eines Wickelbandes zusammengefaßt sein. Um den Leitungsstrang 1 mit einem Trägermaterial 4, wie beispielsweise dem Dachhimmel eines Kraftfahrzeuges, zu verbinden, wird die Folie 3 mittels eines U-förmigen Werkzeuges 5 auf das Trägermaterial 4 gepreßt, wodurch eine von den Leitungen 2 beabstandete Kontaktfläche 6 entsteht. Durch thermisches Verschweißen wird dann eine mechanische Verbindung zwischen Trägermaterial 4 und Folie 3 bzw. Leitungsstrang 1 hergestellt, was in Fig. 1b dargestellt ist. Dazu müssen die Werkstoffe von Folie 3 und Trägermaterial 4 derart zueinander ausgewählt werden, daß diese miteinander thermisch verschweißbar sind. Als mögliche Werkstoffe kommen beispielsweise Polyethylen, Polypropylen, Polyamid oder Polyvinylchlorid in Frage. Vorzugsweise wird für Folie 3 und Trägermaterial 4 der gleiche Werkstoff verwendet, wobei es jedoch aufgrund anderer Erwägungen für die Fertigung zweckmäßig sein kann, verschiedene Werkstoffe zu benutzen. Die Folie 3 kann sich in Längsrichtung vollständig oder nur partiell erstrecken, was auch von den Anforderungen an die Festigkeit der Verbindung abhängig ist. Die für den Schweißvorgang notwendige Wärmeenergie kann durch verschiedene physikalische Prinzipien erzeugt werden, wie beispielsweise Ultraschall, Heizluft oder Hochfrequenzstrahlen. Vorzugsweise wird das Werkzeug 5 zum Erzeugen der Kontaktfläche 6 in die Schweißapparatur integriert, so daß beispielsweise das Werkzeug 5 gleichzeitig die Ultraschall-Sonde oder der HF-Resonator ist.

In der Fig. 2a ist eine weitere Ausführungsform dargestellt, bei der die Folie 3 vollständig um die Leitungen 2 gewickelt wird, wobei die Folienenden jeweils seitlich überstehen und miteinander verbunden werden, so daß die seitlich überstehenden Bereiche eine Kontaktfläche 6 bilden. In der Fig. 2a ist eine abgewandelte Ausführungsform dargestellt, bei der die Folie 3 nur einseitig übersteht. Durch die exponierte Ausbildung der Kontaktflächen 6 kann gegebenenfalls auf ein Werkzeug 5 verzichtet werden, was die Folie 3 auf das Trägermaterial 4 preßt.

In den Fig. 3a - b ist eine weitere Ausführungsform dargestellt, bei der die Folie die Leitungen 2 bzw. den Leitungsstrang 1 nur teilweise radial umfaßt. Dabei können die Leitungen 2 einzeln mit der Folie verbunden sein, so daß diese erst im Zusammenspiel den Leitungsstrang 1 bilden, oder aber die Leitungen 2 können mittels einer zusätzlichen Umwicklung bereits zu einem Leitungsstrang 1 zusammengefaßt worden sein, der dann mit der Folie 3 verbunden wird. Die Folie 3 ist mit einer separaten Kontaktfläche 6 ausgebildet, über die der Leitungsstrang 1 mit dem Trägermaterial 4 thermisch verschweißbar ist. Entsprechend können die Leitungen 2 mittels eines Kabelbinders 7 mit Schloß 8 zu einem Leitungsstrang 1 zusammengefaßt werden, wobei an dem Kabelbinder 7 eine vorzugsweise rechteck- oder kreisförmige Kontaktfläche 6 angeordnet ist, wobei Kabelbinder 7 und Kontaktfläche 6 vorzugsweise einstückig ausgebildet sind. Denkbar wäre auch den Kabelbinder 7 als den Leitungsstrang 1 nicht vollständig umschließenden Kabelhalter auszubilden. Der Kabelhalter wird dann z. B. mittels einer Folie 30 oder anderen den Leitungsstrang 1 umschließenden Mitteln an dem Leitungsstrang 1 gehalten. In diesem Fall wäre der einteilige Kabelbinder 7 durch zwei Teile, nämlich Kabelhalter und eine den Kabelhalter an dem Leitungsstrang haltenden Folie, gebildet.

Die zuvor beschriebenen Ausführungsformen können bei Bedarf auch miteinander kombiniert werden, was eine optimale Anpassung an die jeweils vorliegenden Fertigungsprozesse erlaubt. Der besondere Vorteil des thermischen Verschweißens liegt darin, daß auf separate Befestigungsmittel oder Verbindungsmittel verzichtet werden kann. Über die Kontaktflächen 6 wird sichergestellt, daß einerseits eine genügend große Fläche mechanisch verbunden ist und andererseits die Gefahr einer thermischen und/oder mechanischen Beschädigung der Leitungen 2 reduziert wird, da Leitungen 2 und Kontaktfläche 6 ausreichend voneinander beabstandet sind.

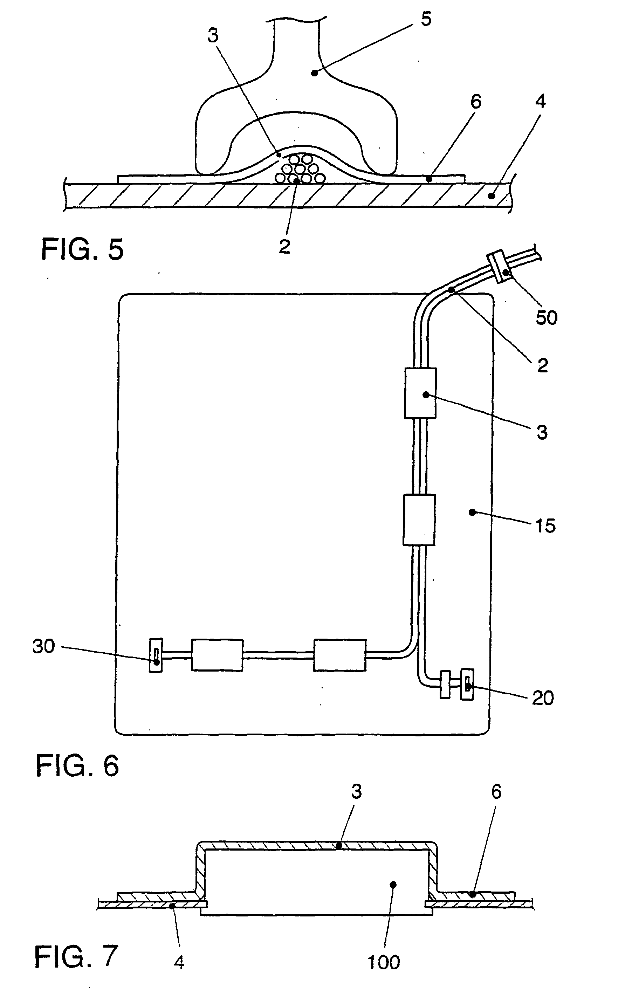

In der Fig. 5 ist eine Befestigung von mehreren Leitungen 2 auf einem Trägermaterial 4 zu erkennen. Über die Leitungen 2 ist eine Folie 3 gelegt, so daß die Leitungen 2 zwischen der Folie 3 und dem Trägermaterial 4 zu liegen kommen. Die Folie 3 überdeckt die Leitungen soweit, daß sich leitungsfreie Kontaktflächen 6 ergeben. Diese Kontaktflächen 6 werden dann mittels eines U-förmigen Werkzeuges 5 auf das Trägermaterial 4 gepreßt und thermisch verschweißt.

Anstatt der Leitungen 2 könnte auch ein anderes Bauteil 100 z. B. eine Innenleuchte oder ein Sensor, wie in Figur 7 zu erkennen ist, befestigt werden. Handelt es sich bei dem Trägermaterial 4 z. B. um ein Auskleidungsteil eines Kraftfahrzeuges, so werden die Bauteile 100 bzw. Leitungen 2 in der Regel auf der der Fahrzeugkarosserie zugewandten Seite des Auskleidungsteils befestigt. Da die Befestigung vom Fahrzeuginnenraum nicht sichtbar ist, können etwaige Nachteile in der Optik der Befestigung in Kauf genommen werden.

In Fig. 6 ist ein Trägermaterial 15 wie z. B. ein Dachhimmel eines Kraftfahrzeuges zu erkennen. Auf diesem Dachhimmel sind zwei Leitungen 2 mit mehreren Folien 3 befestigt. Die Leitungen 2 sind elektrisch mit den Verbrauchern 20 und 30 verbunden. Die Verbraucher 20; 30 können beispielsweise Sensoren, Leuchten oder Schalter sein. Das Auskleidungsteil wird vor der Montage im Kraftfahrzeug soweit vorverkabelt, daß bei der Montage für die elektrische Kontaktierung nur noch der Kontakt 50 geschlossen werden muß. Die Folien 3 können in beliebiger Anzahl, Fläche und Abständen über die Leitungen 2 zu deren Befestigung vorgesehen werden. Dabei ist es von besonderem Vorteil, daß diese direkt mit dem Auskleidungsteil 15 verbunden werden und keine besonderen Maßnahmen zur Vorbereitung der Befestigungsstellen erforderlich sind. Auch ist es möglich, je nach Bedarf, unterschiedliche Verlegebahnen zu wählen.

## Patentansprüche

1. Verfahren zur Befestigung eines Bauteils auf einem Trägermaterial (4), mit einem Befestigungsmittel (3; 7), wobei das Befestigungsmittel eine Kontaktfläche (6) aufweist, **dadurch gekennzeichnet, daß** die Kontaktfläche aus einem mit dem Trägermaterial (4) thermisch verschweißbarem Material besteht, und durch zumindest punktuelles thermisches Verschweißen der Kontaktfläche (6) mit dem Trägermaterial (4) das Bauteil auf dem Trägermaterial (4) befestigt wird.

2. Verfahren nach Anspruch 1, **dadurch gekennzeichnet, daß** Bauteil eine Leitung (2), insbesondere eine elektrische Leitung ist, und das Befestigungsmittel (3; 7) ein Kabelbinder (7) und/oder eine Folie (3) ist und daß mehrere Leitungen (2) mit einem Kabelbinder (7) und/oder einer Folie (3), die mindestens teilweise die Leitungen (2) radial umfaßt, zusammengefaßt werden, und die Kontaktfläche (6) der Folie (3) und/oder dem Kabelbinder (7) zugeordnet ist

3. Verfahren nach Anspruch 1, **dadurch gekennzeichnet, daß** das Befestigungsmittel (3) eine Folie (3) ist, und die Folie (3) die auf dem Trägermaterial (4) angeordnete Leitung (2) zumindest abschnittsweise überdeckt.

4. Verfahren nach einem der Ansprüche 2 oder 3, **dadurch gekennzeichnet, daß** die Folie (3) radial vollständig um die Leitungen (2) gewickelt wird, die Folienenden miteinander verbunden werden, wobei die Leitungen radial zur Folie (3) bewegbar sind, und mittels eines Werkzeuges (5) die Folie (3) mindestens an einer Seite auf das Trägermaterial (4) gepreßt wird, so daß eine leitungsfreie Kontaktfläche (6) der Folie auf dem Trägermaterial (4) entsteht, die thermisch mit dem Trägerteil (4) verschweißbar ist.

5. Verfahren nach einem der Ansprüche 1 bis 4, **dadurch gekennzeichnet, daß** als Trägermaterial (4) und/oder Folie (3) und/oder Kabelbinder (7) Polyethylen, Polypropylen, Polyvinylchlorid oder Polyamid verwendet wird.

6. Verfahren nach einem der Ansprüche 1 bis 5, **dadurch gekennzeichnet, daß** als Trägermaterial (4) und Befestigungsmittel im Bereich der Kontaktfläche der gleiche Werkstoff verwendet wird.

7. Verfahren nach einem der Ansprüche 1 bis 6, **dadurch gekennzeichnet, daß** das Trägermaterial (4) und der Kabelbinder (7) und/oder Folie (3) mittels HF-Schweißen, Ultraschallschweißen, Heißluftschweißen oder Heizstabrollerschweißen miteinander verbunden werden.

8. Auskleidungsteil mit einem Trägermaterial und einem Befestigungsmittel zum Befestigen von Kleinbauteilen auf einem Trägermaterial, wobei das Befestigungsmittel eine Kontaktfläche aufweist, **dadurch gekennzeichnet, daß** die Kontaktfläche (6) aus einem mit dem Trägermaterial (4) thermisch verschweißbaren Material besteht und das Befestigungsmittel (3; 7) durch eine thermische Verschweißung der Kontaktfläche (6) mit dem Trägermaterial (4) verbunden ist.

## Claims

1. Method for fastening a component on a supporting material (4), with a fastening means (3; 7), the fastening means having a contact area (6), **characterized in that** the contact area consists of a material which can be thermally welded to the supporting material (4), and the component is fastened on the supporting material (4) by at least punctiform thermal welding of the contact area (6) to the supporting material (4).

2. Method according to Claim 1, **characterized in that** the component is a line (2), in particular an electrical line, and the fastening means (3; 7) is a cable tie (7) and/or a film (3) and **in that** a number of lines (2) are grouped together by a cable tie (7) and/or a film (3), which radially encloses the lines (2) at least partially, and the contact area (6) is assigned to the film (3) and/or the cable tie (7).

3. Method according to Claim 1, **characterized in that** the fastening means (3) is a film (3), and the film (3) covers over at least portions of the line (2) arranged on the supporting material (4).

4. Method according to either of Claims 2 and 3, **characterized in that** the film (3) is radially wound completely around the lines (2), the ends of the film are connected to each other, the lines being radially movable in relation to the film (3), and, by means of a tool (5), the film (3) is pressed at least on one side onto the supporting material (4), so that a line-free contact area (6) of the film which can be thermally welded to the supporting part (4) is produced on the supporting material (4).

5. Method according to one of Claims 1 to 4, **characterized in that** polyethylene, polypropylene, polyvinyl chloride or polyamide is used as the supporting material (4) and/or film (3) and/or cable tie (7).

6. Method according to one of Claims 1 to 5, **characterized in that** the same material is used as the supporting material (4) and the fastening means in the region of the contact area.

7. Method according to one of Claims 1 to 6, **characterized in that** the supporting material (4) and the cable tie (7) and/or film (3) are connected to one another by means of HF welding, ultrasonic welding, hot-air welding or heated-rod roller welding.

8. Lining part with a supporting material and a fastening means for fastening small components on a supporting material, the fastening means having a contact area, **characterized in that** the contact area (6) consists of a material which can be thermally welded to the supporting material (4) and the fastening means (3; 7) is connected to the supporting material (4) by thermal welding of the contact area (6).

## Revendications

1. Procédé de fixation d'un composant sur un matériau de support (4), comprenant un moyen de fixation (3 ; 7), le moyen de fixation présentant une surface de contact (6), **caractérisé en ce que** la surface de contact se compose d'un matériau pouvant être soudé thermiquement au matériau de support (4) et **en ce que** le composant est fixé sur le matériau de support (4) par soudage thermique au moins ponctuel de la surface de contact (6) au matériau de support (4).

2. Procédé selon la revendication 1, **caractérisé en ce que** le composant est une conduite (2), en particulier une conduite électrique, et le moyen de fixation (3 ; 7) est un serre-câble (7) et/ou une feuille (3) et **en ce que** plusieurs conduites (2) sont réunies avec un serre-câble (7) et/ou une feuille (3), qui entoure radialement les conduites (2) au moins partiellement, et la surface de contact (6) est associée à la feuille (3) et/ou au serre-câble (7).

3. Procédé selon la revendication 1, **caractérisé en ce que** le moyen de fixation (3) est une feuille (3), et la feuille (3) recouvre au moins par portions la conduite (2) disposée sur le matériau de support (4).

4. Procédé selon l'une quelconque des revendications 2 ou 3, **caractérisé en ce que** la feuille (3) est enroulée radialement complètement autour des conduites (2), les extrémités de la feuille sont connectées les unes aux autres, les conduites pouvant se déplacer radialement par rapport à la feuille (3), et la feuille (3) étant pressée au moins au niveau d'un côté sur le matériau de support (4) au moyen d'un outil (5), de sorte qu'une surface de contact (6) de la feuille exempte de conduite soit présente sur le matériau de support (4), laquelle peut être soudée thermiquement à la partie de support (4).

5. Procédé selon l'une quelconque des revendications 1 à 4, **caractérisé en ce que** l'on utilise comme matériau de support (4) et/ou feuille (3) et/ou serre-câble (7) du polyéthylène, du polypropylène, du polychlorure de vinyle ou du polyamide.

6. Procédé selon l'une quelconque des revendications 1 à 5, **caractérisé en ce que** l'on utilise le même matériau comme matériau de support (4) et comme moyen de fixation dans la région de la surface de contact.

7. Procédé selon l'une quelconque des revendications 1 à 6, **caractérisé en ce que** le matériau de support (4) et le serre-câble (7) et/ou la feuille (3) sont connectés les uns aux autres au moyen de soudage HF, de soudage aux ultrasons, de soudage à l'air chaud ou de soudage par rouleaux et baguette chauffante.

8. Pièce d'habillage comprenant un matériau de support et un moyen de fixation pour fixer des petits composants sur un matériau de support, le moyen de fixation présentant une surface de contact, **caractérisée en ce que** la surface de contact (6) se compose d'un matériau pouvant être soudé thermiquement au matériau de support (4) et le moyen de fixation (3 ; 7) est connecté au matériau de support (4) par un soudage thermique de la surface de contact (6).
